# EUROPÄISCHE PATENTSCHRIFT

(11) **EP 3 906 773 B1**
(45) Veröffentlichungstag und Bekanntmachung des Hinweises auf die Patenterteilung: **16.07.2025**
(21) Anmeldenummer: 21157022.1
(22) Anmeldetag: 15.02.2021
(51) Int. Cl.: A01D 69/02, B60W 10/06, B60W 10/08, B60W 10/26, B60W 10/30, B60W 20/11, B60W 50/00

(54) **LANDWIRTSCHAFTLICHE ARBEITSMASCHINE UMFASSEND EINE HYBRIDE ANTRIEBSANORDNUNG MIT ENERGIESPEICHER, WOBEI DER LADEZUSTAND DES ENERGIESPEICHERS AUF BASIS EINER PROGNOSE DES ZU ERWARTENDEN ENERGIEBEDARFS GEREGELT WIRD**
AGRICULTURAL MACHINE WITH HYBRID DRIVE UNIT COMPRISING AN ENGERGY STORAGE, WHEREIN THE STATE OF CHARGE OF THE ENERGY STORAGE IS CONTROLLED BASED ON A PREDICTION OF THE EXPECTED WORK LOAD
MACHINE DE TRAVAIL AGRICOLE COMPRENANT UN ENGIN HYBRIDE ET UN ACCUMULATEUR D'ÉNERGIE, L'ÉTAT DE CHARGE DE L'ACCUMULATEUR D'ÉNERGIE ÉTANT CONTROLÉ SUR LA BASE D'UN PRONOSTIC DE LA CHARGE DE TRAVAIL ATTENDUE

(30) Priorität: 07.05.2020 DE 102020112451
(43) Veröffentlichungstag der Anmeldung: 10.11.2021
(73) Patentinhaber: CLAAS Selbstfahrende Erntemaschinen GmbH, 33428 Harsewinkel (DE)
(72) Erfinder: Sprigade, Daniel, 59427 Unna (DE); Wohlfahrt, Fabian, 33428 Harsewinkel (DE); Wilken, Andreas, 49143 Bissendorf (DE); Heymann, Philipp, 59519 Möhnesee Wamel (DE)
(74) Vertreter: CLAAS Gruppe

(56) Entgegenhaltungen:
- EP-A1- 1 563 724
- EP-A1- 2 253 192
- DE-A1- 102010 003 940
- DE-A1- 102011 118 543
- DE-A1- 102017 222 778
- US-A1- 2014 148 984

## Beschreibung

Die vorliegende Erfindung betrifft eine landwirtschaftliche Arbeitsmaschine gemäß dem Oberbegriff von Anspruch 1.

Der bekannte Stand der Technik (EP 3 527 353 A1), von dem die Erfindung ausgeht, betrifft eine landwirtschaftliche Arbeitsmaschine gemäß dem Oberbegriff von Anspruch 1.

Die landwirtschaftliche Arbeitsmaschine ist erfindungsgemäß ein Mähdrescher oder ein Feldhäcksler.

Auf dem technischen Gebiet der Landwirtschaft ist es bekannt, verschiedene Abläufe einer landwirtschaftlichen Arbeitsmaschine automatisiert oder teilautomatisiert ablaufen zu lassen, darunter unter anderem den Betrieb und die Steuerung eines Großteils der Arbeitsaggregate der Arbeitsmaschine. Unter einem Arbeitsaggregat wird insbesondere eine landwirtschaftliche Arbeit unterstützende oder verrichtende und dadurch Leistung verbrauchende Systemkomponente der Arbeitsmaschine verstanden. Neben den vorgenannten Anbauten sind dies beispielsweise Haspel, Schneidwerk, Dreschwerk, Fördereinrichtungen (Förderschnecke oder -band), Hubwerke (Front- oder Heckhubwerk) oder dergleichen. All dies sind Leistungsverbraucher.

Während der Fahrt eines Mähdreschers durch den Feldbestand wird beispielsweise dessen Haspel und Schneidwerk betrieben. Außerdem wird das Schnittgut über Förderschnecken und -bänder durch einen Einzugskanal transportiert, wobei das Schnittgut auch ein Dreschwerk durchläuft. Die einzelnen Leistungsverbraucher werden im Bedarfsfall automatisch zugeschaltet oder getrennt. Beispielsweise ist denkbar, dass, wenn ein Mähdrescher in einen Feldbestand hineinfährt, ein Fronthubwerk mit daran angeordneter Haspel und Schneidwerk abgesenkt wird und Haspel, Schneidwerk, Förderschnecken und -bänder sowie Dreschwerk eingeschaltet werden. Beim Ausfahren aus dem Feldbestand oder bei einer Wende ist es wiederum denkbar, dass Haspel, Schneidwerk, Förderschnecken und -bänder sowie Dreschwerk ausgeschaltet und das Fronthubwerk mit daran angeordneter Haspel und Schneidwerk angehoben wird.

Die in Rede stehenden landwirtschaftlichen Arbeitsmaschinen weisen üblicherweise eine Verbrennungskraftmaschine, insbesondere einen Dieselmotor, als gemeinsamen Antrieb für die Arbeitsaggregate und den Fahrantrieb auf. Als einziger Energiespeicher dient der Verbrennungskraftmaschine ein Kraftstofftank.

Es sind auch landwirtschaftliche Arbeitsmaschinen bekannt, die neben einer als Hauptmaschine betriebenen Verbrennungskraftmaschine, auch als Primärantrieb bezeichnet, noch eine separate, elektrische Hilfsmaschine (E-Maschine) aufweisen. Diese dient in der Regel ausschließlich dazu, dass der Fahrer der landwirtschaftlichen Arbeitsmaschine im Bedarfsfall die Systemleistung kurzzeitig um die Leistungsfähigkeit der Elektromaschine steigern kann (sogenannter Boost-Betrieb). Als elektrischer Energiespeicher dient der elektrischen Hilfsmaschine beispielsweise ein Akku.

Es ist auch ein Hybridsystem bekannt, bei dem eine elektrische Hilfsmaschine Lastschwankungen bedingt durch Unterschiede in der Bestandsdichte ausgleicht. Bei einem plötzlichen Lastanstieg aufgrund einer Erhöhung der Dichte des Erntegutbestands stellt die elektrische Hilfsmaschine sofort zusätzliche Leistung zur Verfügung, wodurch die Drehzahl an einer Abtriebswelle der Verbrennungskraftmaschine weitestgehend konstant gehalten wird.

Es ist dabei eine Herausforderung, auch in Phasen des landwirtschaftlichen Arbeitsauftrags, in denen eine erhöhte Motorlast vorliegt, genügend Energiereserven für eine optimale elektrische Unterstützung der Verbrennungskraftmaschine durch die elektrische Hilfsmaschine zu haben.

Ein Steuerungskonzept zum Betrieb eines Nutzfahrzeugs mit Verbrennungskraftmaschine und einer elektrischen Hilfsmaschine auf Grundlage eines prognostizierten Fahrverbrauchs sowie eines prognostizierten Verbrauchs der Nebenabtriebsfunktionen des Nutzfahrzeugs ist aus der DE 10 2011 118 543 A bekannt. Weitere Hybridsteuerverfahren sind auch aus der DE 10 2011 118 543 A oder EP 2 253 192 A1 bekannt.

Der Erfindung liegt das Problem zugrunde, die bekannte landwirtschaftliche Arbeitsmaschine derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Besonders bevorzugte Ausgestaltungen sind Gegenstand der Unteransprüche.

Wesentlich ist die grundsätzliche Überlegung, den elektrischen Energiespeicher, der die elektrische Hilfsmaschine im Bedarfsfall mit elektrischer Energie versorgt, proaktiv, also vorausschauend, zu regeln. Erfindungsgemäß werden dazu Vorfelddaten und/oder Bestandsdaten, herangezogen, die eine Prognose über die zu erwartende Motorlast im weiteren Verlauf der Durchführung des landwirtschaftlichen Arbeitsauftrags zulassen. Zusätzlich wird der Bedarf an elektrischer Energie zusätzlich basierend auf Sensordaten einer Durchsatzsensorik der landwirtschaftlichen Arbeitsmaschine prognostiziert. Abhängig von der Prognose wird dann vorausschauend der Ladezustand des elektrischen Energiespeichers angepasst, was im Weiteren noch näher erläutert wird.

Im Einzelnen wird vorgeschlagen, dass die Regeleinrichtung des Fahrerassistenzsystems eingerichtet ist, den Ladezustand des elektrischen Energiespeichers vorausschauend in Abhängigkeit von dem zu erwartenden Bedarf an elektrischer Energie zu regeln.

Im Folgenden wird die Erfindung anhand einer lediglich Ausführungsbeispiele darstellenden Zeichnung näher erläutert. In der Zeichnung zeigt
- Fig. 1: eine schematische Seitenansicht einer vorschlagsgemäßen landwirtschaftlichen Arbeitsmaschine und
- Fig. 2: eine schematische Darstellung der Funktionsweise einer Regeleinrichtung der vorschlagsgemäßen landwirtschaftlichen Arbeitsmaschine.

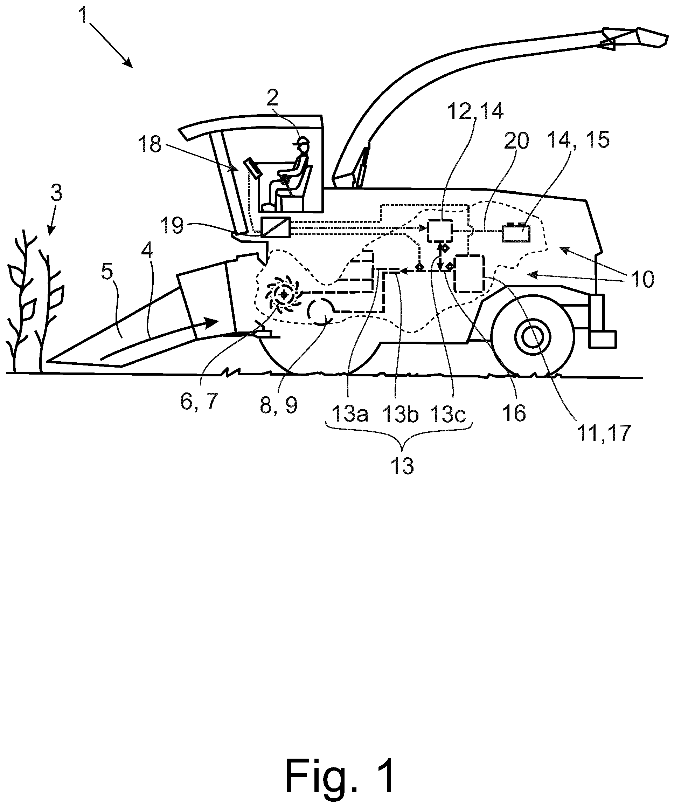

Die Zeichnung zeigt in Fig. 1 eine vorschlagsgemäße landwirtschaftliche Arbeitsmaschine 1, hier in Form eines Feldhäckslers. Die folgenden Ausführungen sind zwar auf einen solchen Feldhäcksler bezogen, gelten aber in entsprechender Weise auch für Mähdrescher.

Die hier und vorzugsweise unter Anwesenheit eines Fahrers 2 in einem manuellen Arbeitsmodus manuell fahrbare und in einem Automatikmodus selbstfahrbare als Erntemaschine ausgebildete landwirtschaftliche Arbeitsmaschine 1 wird durch einen Feldbestand 3, beispielsweise ein Maisfeld, gefahren. Ein Gutfluss 4 aus Pflanzenteilen wird während des Betriebs durch einen Einzugskanal 5 eingezogen und zum Zwecke der weiteren Zerkleinerung zu einem Leistungsverbraucher 6, hier einem Arbeitsaggregat 7 in Form einer Häckslertrommel, geführt. Ein anderer Leistungsverbraucher 8 bildet einen Fahrantrieb 9 mit einer Antriebsachse für Antriebsräder.

Außerdem verfügt die landwirtschaftliche Arbeitsmaschine 1 über eine Antriebsanordnung 10, die zum einen als Hauptmaschine eine Verbrennungskraftmaschine 11, hier und vorzugsweise in Form eines Dieselmotors, und zum anderen eine elektrische Hilfsmaschine 12, hier und vorzugsweise in Form einer Elektromaschine, aufweist. Die Antriebsanordnung 10 dient sowohl zum Antrieb des Fahrantriebs 9 als auch, und zwar gleichzeitig zum Antrieb des Fahrantriebs 9, zum Antrieb verschiedener Arbeitsaggregate 7. Hauptmaschine und Elektromaschine wirken also nach Art eines Hybridsystems zusammen.

Dazu ist als Bestandteil der Antriebsanordnung 10 ein von der Verbrennungskraftmaschine 11 ausgehender Antriebsstrang 13 vorgesehen, der dem Ausleiten von Antriebsleistung der Verbrennungskraftmaschine 11 an die Leistungsverbraucher 6 und 8 dient. Der Antriebsstrang 13 weist hier und vorzugweise drei Teilantriebsstränge 13a, 13b und 13c auf, in die sich dieser aufteilt. Die elektrische Hilfsmaschine 12 ist an den Antriebsstrang 13 angekoppelt, beispielsweise über ein Getriebe (nicht dargestellt).

Der erste Teilantriebsstrang 13a ist hier und vorzugsweise zum Übertragen von Antriebsleistung der Verbrennungskraftmaschine 11 an das mindestens eine Arbeitsaggregat 7 (z.B. Häckslertrommel) konfiguriert. Der zweite Teilantriebsstrang 13b ist hier und vorzugsweise zum Übertragen von Antriebsleistung der Verbrennungskraftmaschine 11 an den Fahrantrieb 9 konfiguriert. Der dritte Teilantriebsstrang 13c ist hier und vorzugsweise zum wechselseitigen Austausch von Antriebsleistung zwischen der Verbrennungskraftmaschine 11 und der elektrischen Hilfsmaschine 12 konfiguriert.

Die elektrische Hilfsmaschine 12, die hier als Elektromaschine ausgebildet ist, ist Bestandteil eines elektrischen Energiebereitstellungssystems 14 des Hybridsystems, das einen mit der elektrischen Hilfsmaschine 12 hier elektrisch verbundenen elektrischen Energiespeicher 15 aufweist. Die elektrische Hilfsmaschine 12 in dem dargestellten Ausführungsbeispiel kann, wenn überschüssige Leistung von der Verbrennungskraftmaschine 11 zur Verfügung steht, als elektrischer Generator betrieben werden. Insbesondere kann die elektrische Hilfsmaschine 12 den Antriebsstrang 13 jedoch unterstützen, nämlich mit zusätzlichem Drehmoment, wenn aufgrund eines Anstiegs des Leistungsbedarfs des Arbeitsaggregats 7 die Drehzahl an einer Abtriebswelle 16 der Verbrennungskraftmaschine 11 einzubrechen droht. "Unterstützen" bedeutet, dass die elektrische Hilfsmaschine 12 zusätzliches Drehmoment erzeugt, so dass sich das von der Verbrennungskraftmaschine 11 erzeugte Drehmoment und das von der elektrische Hilfsmaschine 12 erzeugte Drehmoment an der Abtriebswelle 16 addieren.

Mit der Abtriebswelle 16 ist eine mit der Verbrennungskraftmaschine 11 verbundene Welle gemeint, auf die von der Verbrennungskraftmaschine 11 und gegebenenfalls der elektrischen Hilfsmaschine 12 ein Drehmoment übertragen wird und mittels der zumindest das Arbeitsaggregat 7 und der Fahrantrieb 9 angetrieben werden. Die Abtriebswelle 16 kann entweder die Ausgangswelle der Verbrennungskraftmaschine 11 oder eine Getriebeausgangswelle eines der Verbrennungskraftmaschine 11 antriebstechnisch nachgeschalteten Getriebes 17 sein.

Die landwirtschaftliche Arbeitsmaschine 1 weist außerdem ein Fahrerassistenzsystem 18 mit einer Regeleinrichtung 19 bzw. einem sogenannten Vorfahrtregler auf, die bzw. der konfiguriert ist, eine Regelung der Verbrennungskraftmaschine 11, der elektrischen Hilfsmaschine 12 und des Fahrantriebs 9 durchzuführen.

Das in den Figuren dargestellte Ausführungsbeispiel betrifft eine landwirtschaftliche Arbeitsmaschine 1, die ein Mähdrescher oder ein Feldhäcksler ist, wobei die landwirtschaftliche Arbeitsmaschine 1 eine Antriebsanordnung 10 mit einer Verbrennungskraftmaschine 11 und mit einem eine elektrische Hilfsmaschine 12 aufweisenden elektrischen Energiebereitstellungssystem 14 aufweist und wobei die landwirtschaftliche Arbeitsmaschine 1 mindestens einen Leistungsverbraucher 6,8 aufweist, der von der Antriebsanordnung 10 antreibbar ist.

Mit der "elektrischen Hilfsmaschine" 12 ist eine elektrische Maschine gemeint, die mit der Abtriebswelle 16 der Verbrennungskraftmaschine 11 oder einer Getriebeausgangswelle eines dieser nachgeschalteten Getriebes 17 antriebstechnisch gekoppelt oder koppelbar ist, um nach Art eines Hybridsystems die Verbrennungskraftmaschine 11 elektrisch zu unterstützen. Die Verbrennungskraftmaschine 11 kann durch die elektrische Hilfsmaschine 12 zumindest antreibend, vorzugsweise wahlweise antreibend oder bremsend, unterstützt werden, das heißt, die elektrische Hilfsmaschine 12 kann zumindest als Motor, vorzugsweise wahlweise als Motor oder Generator, betrieben werden. Die im Motorbetrieb benötigte elektrische Energie bzw. die im Generatorbetrieb erzeugte Energie wird, über eine entsprechende elektrische Verbindung 20, mit dem elektrischen Energiespeicher 15 ausgetauscht. Wesentlich ist nun, dass die Regeleinrichtung 19 des Fahrerassistenzsystems 18 eingerichtet ist, den Ladezustand 21 des elektrischen Energiespeichers 15 vorausschauend in Abhängigkeit von dem zu erwartenden Bedarf an elektrischer Energie zu regeln.

Der Bedarf an elektrischer Energie ergibt sich aus der zu erwartenden Motorlast für das Durchfahren eines vor der landwirtschaftlichen Arbeitsmaschine 1 liegenden Feldabschnitts und der dafür notwendigen Unterstützung der Verbrennungskraftmaschine 11 durch die elektrische Hilfsmaschine 12. Die zu erwartende Motorlast wird in einer Prognoseroutine anhand bestimmter Sensordaten, die im Weiteren näher definiert werden, prognostiziert. Nach welcher Strategie die Verbrennungskraftmaschine 11 dabei von der elektrischen Hilfsmaschine 12 unterstützt wird, wird insbesondere von dem Fahrerassistenzsystem 18 vorgegeben. Eine solche vorgegebene Strategie kann die Durchführung des Arbeitsauftrages mit möglichst geringem Kraftstoffverbrauch oder mit möglichst geringem Zeitaufwand sein, um lediglich einige Beispiele zu nennen. Insbesondere wird die Verbrennungskraftmaschine 11 dahingehend von der elektrischen Hilfsmaschine unterstützt, dass sich ihr Dynamikverhalten oder ihr Effizienzverhalten verbessert.

Bei dem in den Figuren dargestellten Ausführungsbeispiel ist ferner vorgesehen, dass die Regeleinrichtung 19 des Fahrerassistenzsystems 18 während der Durchführung eines landwirtschaftlichen Arbeitsauftrags in einer Prognoseroutine den Bedarf an elektrischer Energie, insbesondere den Bedarf an elektrischer Energie für einen bestimmten Zeit- oder Wegabschnitt, basierend auf Vorfelddaten 22 und/oder Bestandsdaten 23 prognostiziert, und dass die Regeleinrichtung 19 basierend auf dem Ergebnis der Prognoseroutine den Ladezustand des elektrischen Energiespeichers 15 anpasst, insbesondere erhöht oder verringert. Erfindungsgemäß prognostiziert die Regeleinrichtung 19 in der Prognoseroutine den Bedarf an elektrischer Energie zusätzlich basierend auf Sensordaten einer Durchsatzsensorik der landwirtschaftlichen Arbeitsmaschine 1 prognostiziert.

Mit dem landwirtschaftlichen Arbeitsauftrag ist ein Erntevorgang gemeint.

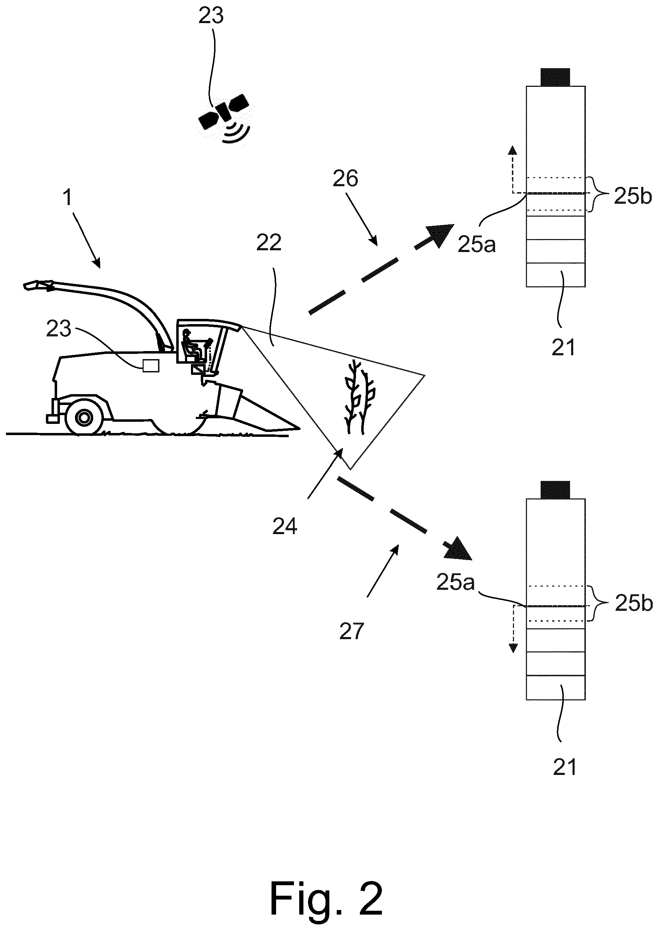

Mit Vorfelddaten 22 sind während der Abarbeitung des landwirtschaftlichen Arbeitsauftrags sensorisch ermittelte Daten über die Eigenschaften eines Vorfeldes 24 gemeint. Das Vorfeld 24 ist ein Bereich des abzuarbeitenden Feldes in Fahrtrichtung unmittelbar vor der landwirtschaftlichen Arbeitsmaschine 1, das heißt der Bereich, der als nächstes durchfahren wird. Die Vorfelddaten 22 werden beispielsweise von einem Vorfeld-Lasersensor, einer Kamera, einer Drohne etc. während der Abarbeitung des landwirtschaftlichen Arbeitsauftrags generiert, wie in Fig.2 symbolisch dargestellt ist.

Mit Bestandsdaten 23 sind bereits vor Beginn der Abarbeitung des landwirtschaftlichen Arbeitsauftrags gesammelte Daten über die Eigenschaften des Feldes, nicht beschränkt auf das Vorfeld 24, sondern vorzugsweise Daten zum gesamten Feld, gemeint. Diese Bestandsdaten 23 werden insbesondere von historischen Signalverläufen abgeleitet, d.h. von Sensordaten, die bei vorausgegangenen landwirtschaftlichen Arbeitsaufträgen erhalten worden sind. Neben gesammelten Daten aus einem Speichermedium können hierbei grundsätzlich auch gesammelte oder Live-Daten eines Satellitensystems herangezogen werden, wie in Fig.2 symbolisch dargestellt ist.

Mit der Durchsatzsensorik ist insbesondere eine Schichthöhenwalze mit Sensoren gemeint, über die die Schichthöhe im Einzugskanal 5 bestimmt wird.

Weiter ist hier und vorzugsweise vorgesehen, dass die Regeleinrichtung 19 basierend auf dem Ergebnis der Prognoseroutine einen Sollwert 25a oder Sollwertebereich 25b für den Ladezustand des elektrischen Energiespeichers 15 einstellt, insbesondere anhebt oder absenkt oder beibehält, und die Verbrennungskraftmaschine 11, die elektrische Hilfsmaschine 12 und den mindestens einen Leistungsverbraucher 6, 8 so regelt, dass der Ladezustand 21 des elektrischen Energiespeichers 15 den Sollwert 25a oder Sollwertebereich 25b erreicht.

Der Ladezustand 21 wird dann entsprechend dem neuen Sollwert 25a oder Sollwertebereich 25b nachgeregelt, indem die Verbrennungskraftmaschine 11, die elektrische Hilfsmaschine 12 und der mindestens eine Leistungsverbraucher 6, 8 entsprechend geregelt werden. Um den Ladezustand 21 zu erhöhen, werden die Verbrennungskraftmaschine 11 und der mindestens eine Leistungsverbraucher 6, 8 so geregelt, dass die elektrische Hilfsmaschine 12 als Generator betrieben wird und elektrische Energie erzeugt, die dem elektrischen Energiespeicher 15 zugeführt wird. Um den Ladezustand 21 zu verringern, werden die Verbrennungskraftmaschine 11 und der mindestens eine Leistungsverbraucher 6, 8 so geregelt, dass die elektrische Hilfsmaschine 12 als Motor betrieben wird und elektrische Energie verbraucht, die vom elektrischen Energiespeicher 15 abgeführt wird.

Darüber hinaus ist hier und vorzugsweise vorgesehen, dass die Regeleinrichtung 19 des Fahrerassistenzsystems 18 den Ladezustand 21 des elektrischen Energiespeichers 15 derart regelt, dass, wenn in der Prognoseroutine ein erhöhter Bedarf 26 an elektrischer Energie prognostiziert wird, der Sollwert 25a oder Sollwertebereich 25b angehoben und in der Folge der Ladezustand 21 des elektrischen 15 Energiespeichers erhöht wird.

Beispielsweise prognostiziert die landwirtschaftliche Arbeitsmaschine 1 aufgrund eines zu durchfahrenden Feldbereichs mit einem erhöhten Unkrautdurchwuchs einen erhöhten Bedarf 26 an elektrischer Energie. Dies wird hier und vorzugsweise über die Vorfelddaten 22 und/oder Bestandsdaten 23, gegebenenfalls auch unter Berücksichtigung der Sensordaten der Durchsatzsensorik prognostiziert.

Mit dem erhöhten Ladezustand 21 ist dann gewährleistet, dass die elektrische Hilfsmaschine 12 die Verbrennungskraftmaschine 11 in ausreichender Weise unterstützen kann, so dass beispielsweise die Verbrennungskraftmaschine 11 effizient betrieben werden kann, insbesondere in einem effizienten Drehzahlbereich oder Leistungsbereich, oder so, dass eine bestimmte maximale Fahrgeschwindigkeit beibehalten werden kann.

Weiterhin ist hier und vorzugsweise vorgesehen, dass die Regeleinrichtung 19 des Fahrerassistenzsystems 18 den Ladezustand 21 des elektrischen Energiespeichers 15 derart regelt, dass, wenn in der Prognoseroutine ein reduzierter Bedarf 27 an elektrischer Energie prognostiziert wird, der Sollwert 25a oder Sollwertebereich 25b abgesenkt und in der Folge der Ladezustand 21 des elektrischen Energiespeichers 15 verringert wird.

Beispielsweise prognostiziert die landwirtschaftliche Arbeitsmaschine 1 aufgrund eines zu durchfahrenden Feldbereichs mit verringerter Bestandsdichte oder eines zu durchfahrenden Vorgewendes einen reduzierten Bedarf 27 an elektrischer Energie. Dies wird über die Vorfelddaten 22 und/oder Bestandsdaten 23, auch unter Berücksichtigung der Sensordaten der Durchsatzsensorik prognostiziert.

Die Verringerung des Ladezustands 21 des elektrischen Energiespeichers 15 wird dadurch erreicht, dass die elektrische Hilfsmaschine 12 die Verbrennungskraftmaschine 11 mehr als vorher unterstützt, wodurch beispielsweise der Kraftstoffverbrauch der Verbrennungskraftmaschine 11 reduziert werden kann; selbst mit dem verringerten Ladezustand 21 ist dann aber immer noch gewährleistet, dass die elektrische Hilfsmaschine 12 die Verbrennungskraftmaschine 11 in ausreichender Weise unterstützen kann.

### Bezugszeichenliste

- 1: Landwirtschaftliche Arbeitsmaschine
- 2: Fahrer
- 3: Feldbestand
- 4: Gutfluss
- 5: Einzugskanal
- 6: Leistungsverbraucher
- 7: Arbeitsaggregat
- 8: Leistungsverbraucher
- 9: Fahrantrieb
- 10: Antriebsanordnung
- 11: Verbrennungskraftmaschine
- 12: Elektrische Hilfsmaschine
- 13: Antriebsstrang
- 13a: Erster Teilantriebsstrang
- 13b: Zweiter Teilantriebsstrang
- 13c: Dritter Teilantriebsstrang
- 14: Elektrisches Energiebereitstellungssystem
- 15: Elektrischer Energiespeicher
- 16: Abtriebswelle
- 17: Antriebstechnisch nachgeschaltetes Getriebe
- 18: Fahrerassistenzsystem
- 19: Regeleinrichtung
- 20: Elektrische Verbindung
- 21: Ladezustand
- 22: Vorfelddaten
- 23: Bestandsdaten
- 24: Vorfeld
- 25a: Sollwert
- 25b: Sollwertbereich
- 26: Erhöhter Bedarf
- 27: Reduzierter Bedarf

## Patentansprüche

1. Landwirtschaftliche Arbeitsmaschine, die ein Mähdrescher oder ein Feldhäcksler ist, wobei die landwirtschaftliche Arbeitsmaschine (1) eine Antriebsanordnung (10) mit einer Verbrennungskraftmaschine (11) und mit einem eine elektrische Hilfsmaschine (12) und einen elektrischen Energiespeicher (15) für die elektrische Hilfsmaschine (12) aufweisenden elektrischen Energiebereitstellungssystem (14) aufweist, einer Durchsatzsensorik, und wobei die landwirtschaftliche Arbeitsmaschine (1) ein Fahrerassistenzsystem (18) mit einer Regeleinrichtung (19) aufweist, die eingerichtet ist, eine Regelung der Verbrennungskraftmaschine (11), der elektrischen Hilfsmaschine (12) und mindestens eines Leistungsverbrauchers (6, 8), der von der Antriebsanordnung (10) antreibbar ist, durchzuführen,
wobei die Regeleinrichtung (19) des Fahrerassistenzsystems (18) eingerichtet ist, einen Ladezustand (21) des elektrischen Energiespeichers (15) vorausschauend in Abhängigkeit von dem zu erwartenden Bedarf an elektrischer Energie zu regeln,
wobei die Regeleinrichtung (19) des Fahrerassistenzsystems (18) während der Durchführung eines landwirtschaftlichen Arbeitsauftrags in einer Prognoseroutine den Bedarf an elektrischer Energie basierend auf Vorfelddaten (22) und/oder Bestandsdaten (23) prognostiziert, und dass die Regeleinrichtung (19) basierend auf dem Ergebnis der Prognoseroutine den Ladezustand (21) des elektrischen Energiespeichers (15) anpasst,
**dadurch gekennzeichnet,**
**dass** die Regeleinrichtung (19) in der Prognoseroutine den Bedarf an elektrischer Energie zusätzlich basierend auf Sensordaten der Durchsatzsensorik der landwirtschaftlichen Arbeitsmaschine (1) prognostiziert, .

2. Landwirtschaftliche Arbeitsmaschine nach Anspruch 1 , **dadurch gekennzeichnet, dass** die Regeleinrichtung (19) basierend auf dem Ergebnis der Prognoseroutine einen Sollwert (25a) oder Sollwertebereich (25b) für den Ladezustand (21) des elektrischen Energiespeichers (15) einstellt, insbesondere anhebt oder absenkt oder beibehält, und die Verbrennungskraftmaschine (11), die elektrische Hilfsmaschine (12) und den mindestens einen Leistungsverbraucher (6, 8) so regelt, dass der Ladezustand (21) des elektrischen Energiespeichers (15) den Sollwert (25a) oder Sollwertebereich (25b) erreicht.

3. Landwirtschaftliche Arbeitsmaschine nach Anspruch 2, **dadurch gekennzeichnet, dass** die Regeleinrichtung (19) des Fahrerassistenzsystems (18) den Ladezustand (21) des elektrischen Energiespeichers (15) derart regelt, dass, wenn in der Prognoseroutine ein erhöhter Bedarf (26) an elektrischer Energie prognostiziert wird, der Sollwert (25a) oder Sollwertebereich (25b) angehoben und in der Folge der Ladezustand (21) des elektrischen Energiespeichers (15) erhöht wird.

4. Landwirtschaftliche Arbeitsmaschine nach Anspruch 2 oder 3, **dadurch gekennzeichnet, dass** die Regeleinrichtung (19) des Fahrerassistenzsystems (18) den Ladezustand (21) des elektrischen Energiespeichers (15) derart regelt, dass, wenn in der Prognoseroutine ein reduzierter Bedarf (27) an elektrischer Energie prognostiziert wird, der Sollwert (25a) oder Sollwertebereich (25b) abgesenkt und in der Folge der Ladezustand (21) des elektrischen Energiespeichers (15) verringert wird.

## Claims

1. An agricultural working machine, which is a combine harvester or a forage harvester, wherein the agricultural working machine (1) has a drive assembly (10) with an internal combustion engine (11) and with an electrical energy supply system (14) having an electrical auxiliary motor (12) and an electrical energy storage device (15) for the electrical auxiliary motor (12), a throughput sensor system, and wherein the agricultural working machine (1) has a driver assistance system (18) with a regulating device (19) which is configured to carry out a regulation of the internal combustion engine (11), of the electrical auxiliary motor (12) and of at least one power consumer (6, 8) which can be driven by the drive assembly (10),
wherein the regulating device (19) of the driver assistance system (18) is configured to regulate a state of charge (21) of the electrical energy storage device (15) in an anticipatory manner as a function of the expected requirement for electrical energy,
wherein, while an agricultural operational assignment is carried out, in a prediction routine, the regulating device (19) of the driver assistance system (18) predicts the requirement for electrical energy based on frontal field data (22) and/or field crop data (23), and in that, on the basis of the result of the prediction routine, the regulating device (19) adjusts the state of charge (21) of the electric energy storage device (15),
**characterized in that**
in the prediction routine, the regulating device (19) additionally predicts the requirement for electrical energy on the basis of sensor data from the throughput sensor system of the agricultural working machine (1).

2. The agricultural working machine according to claim 1, **characterized in that**, on the basis of the result of the prediction routine, the regulating device (19) adjusts a target value (25a) or target value range (25b) for the state of charge (21) of the electrical energy storage device (15), in particular increases or decreases or maintains it, and regulates the internal combustion engine (11), the electrical auxiliary motor (12) and the at least one power consumer (6, 8) in a manner such that the state of charge (21) of the electrical energy storage device (15) attains the target value (25a) or target value range (25b).

3. The agricultural working machine according to claim 2, **characterized in that** the regulating device (19) of the driver assistance system (18) regulates the state of charge (21) of the electrical energy storage device (15) in a manner such that when a raised requirement (26) for electrical energy is predicted in the prediction routine, the target value (25a) or target value range (25b) is increased and subsequently, the state of charge (21) of the electrical energy storage device (15) is raised.

4. The agricultural working machine according to claim 2 or claim 3, **characterized in that** the regulating device (19) of the driver assistance system (18) regulates the state of charge (21) of the electrical energy storage device (15) in a manner such that when a reduced requirement (27) for electrical energy is predicted in the prediction routine, the target value (25a) or target value range (25b) is decreased and subsequently, the state of charge (21) of the electrical energy storage device (15) is reduced.

## Revendications

1. Machine de travail agricole qui est une moissonneuse-batteuse ou une ramasseuse-hacheuse, la machine de travail agricole (1) comprenant un dispositif d'entraînement (10) doté d'un moteur à combustion interne (11) et d'un système de fourniture d'énergie électrique (14) comportant une machine auxiliaire électrique (12) et un accumulateur d'énergie électrique (15) pour la machine auxiliaire électrique (12), d'un système de capteurs de débit, et
la machine de travail agricole (1) présentant un système d'assistance au conducteur (18) doté d'un dispositif de régulation (19) qui est conçu pour effectuer une régulation du moteur à combustion interne (11), de la machine auxiliaire électrique (12) et d'au moins un consommateur de puissance (6, 8), qui peut être entraîné par le dispositif d'entraînement (10),
le dispositif de régulation (19) du système d'assistance au conducteur (18) étant conçu pour réguler de manière prédictive un état de charge (21) de l'accumulateur d'énergie électrique (15), en fonction des besoins attendus en énergie électrique,
le dispositif de régulation (19) du système d'assistance au conducteur (18) pronostiquant au cours d'une routine de pronostic, pendant l'exécution d'une tâche agricole, les besoins en énergie électrique, sur la base de données de « champ devant » (22) et/ou de données de culture (23), et que le dispositif de régulation (19) adapte l'état de charge (21) de l'accumulateur d'énergie électrique (15) sur la base du résultat de la routine de pronostic,
**caractérisée en ce que**
au cours de la routine de pronostic, le dispositif de régulation (19) pronostique les besoins en énergie électrique en plus sur la base de données de capteurs du système de capteurs de débit de la machine de travail agricole (1).

2. Machine de travail agricole selon la revendication 1, **caractérisée en ce que** le dispositif de régulation (19) régule, notamment augmente ou baisse ou maintient, une valeur de consigne (25a) ou une plage de valeurs de consigne (25b) pour l'état de charge (21) de l'accumulateur d'énergie électrique (15), sur la base du résultat de la routine de pronostic, et le moteur à combustion interne (11) règle la machine auxiliaire électrique (12) et le consommateur de puissance (6, 8), au nombre d'au moins un, de manière à ce que l'état de charge (21) de l'accumulateur d'énergie électrique (15) atteigne la valeur de consigne (25a) ou la plage de valeurs de consigne (25b).

3. Machine de travail agricole selon la revendication 2, **caractérisée en ce que** le dispositif de régulation (19) du système d'assistance au conducteur (18) règle l'état de charge (21) de l'accumulateur d'énergie électrique (15) de manière à ce que, si des besoins accrus (26) en énergie électrique sont pronostiqués dans la routine de pronostic, la valeur de consigne (25a) ou la plage de valeurs de consigne (25b) est augmentée et par la suite, l'état de charge (21) de l'accumulateur d'énergie électrique (15) est augmenté.

4. Machine de travail agricole selon la revendication 2 ou 3, **caractérisée en ce que** le dispositif de régulation (19) du système d'assistance au conducteur (18) règle l'état de charge (21) de l'accumulateur d'énergie électrique (15) de manière à ce que, si des besoins réduits (27) en énergie électrique sont pronostiqués dans la routine de pronostic, la valeur de consigne (25a) ou la plage de valeurs de consigne (25b) est abaissée et par la suite, l'état de charge (21) de l'accumulateur d'énergie électrique (15) est diminué.
